(19) Europäisches Patentamt
European Patent Office
Office européen des brevets

(11) EP 2 835 403 A1

(12) **EUROPÄISCHE PATENTANMELDUNG**

(43) Veröffentlichungstag:
**11.02.2015 Patentblatt 2015/07**

(21) Anmeldenummer: **13179404.2**

(22) Anmeldetag: **06.08.2013**

(51) Int Cl.:
***C09D 183/04** (2006.01)* ***C09D 5/18** (2006.01)*
***C09K 21/00** (2006.01)* ***C08L 83/04** (2006.01)*
***C09K 21/10** (2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **HILTI Aktiengesellschaft**
**9494 Schaan (LI)**

(72) Erfinder: **Marauska, Juliane**
**72766 Reutlingen (DE)**

(74) Vertreter: **Hilti Aktiengesellschaft**
**Corporate Intellectual Property**
**Feldkircherstrasse 100**
**Postfach 333**
**9494 Schaan (LI)**

(54) **Dämmschichtbildende Zusammensetzung und deren Verwendung**

(57) Es wird eine dämmschichtbildende Zusammensetzung beschrieben, die ein Bindemittel auf Basis additionsvernetzender Polyorganosiloxane enthält. Durch die erfindungsgemäße Zusammensetzung, deren Expansionsrate relativ hoch ist, können in einfacher und schneller Weise Beschichtungen mit der für die jeweilige Feuerwiderstandsdauer erforderlichen Schichtdicke aufgetragen werden, wobei die Schichtdicke auf ein Minimum reduziert und dennoch eine große isolierende Wirkung erreicht werden kann. Die erfindungsgemäße Zusammensetzung eignet sich besonders für den Brandschutz, insbesondere als Beschichtung von metallischen und nicht metallischen Substraten, etwa Stahlbauteilen, wie Stützen, Trägern, Fachwerkstäben, zur Erhöhung der Feuerwiderstandsdauer.

EP 2 835 403 A1

## Beschreibung

Die vorliegende Erfindung betrifft eine dämmschichtbildende Zusammensetzung, insbesondere eine Zusammensetzung mit intumeszierenden Eigenschaften, die ein Bindemittel auf Basis additionsvernetzender Polyorganosiloxane enthält, sowie deren Verwendung für den Brandschutz, insbesondere für Beschichtungen von Bauteilen, wie Stützen, Trägern, oder Fachwerkstäben, zur Erhöhung der Feuerwiderstandsdauer.

Dämmschichtbildende Zusammensetzungen, auch intumeszierende Zusammensetzungen genannt, werden üblicherweise zur Bildung von Beschichtungen auf die Oberfläche von Bauteilen aufgebracht, um diese vor Feuer oder gegen große Hitzeeinwirkung etwa in Folge eines Brandes zu schützen. Stahlkonstruktionen sind mittlerweile fester Bestandteil der modernen Architektur, auch wenn sie einen entscheidenden Nachteil im Vergleich zum Stahlbetonbau haben. Oberhalb von ca. 500°C sinkt die Lasttragekapazität des Stahls um 50%, d.h. der Stahl verliert einen großen Teil seiner Stabilität und seiner Tragfähigkeit. Diese Temperatur kann je nach Brandbelastung, etwa bei direkter Feuereinwirkung (ca. 1000°C), bereits nach ca. 5-10 Minuten erreicht werden, was häufig zu einem Tragfähigkeitsverlust der Konstruktion führt. Zielsetzung des Brandschutzes, insbesondere des Stahlbrandschutzes ist es nun, die Zeitspanne bis zum Tragfähigkeitsverlust einer Stahlkonstruktion im Brandfall zur Rettung von Menschenleben und wertvollen Gütern möglichst lange hinauszuzögern.

In den Bauordnungen vieler Länder werden hierzu entsprechende Feuerwiderstandszeiten für bestimmte Bauwerke aus Stahl gefordert. Sie werden durch sogenannte F-Klassen wie F 30, F 60, F 90 (Feuerwiderstandsklassen nach DIN 4102-2) oder amerikanische Klassen nach ASTM usw. definiert. Dabei bedeutet nach DIN 4102-2 zum Beispiel F 30, dass eine tragende Stahlkonstruktion im Brandfall unter Normbedingungen mindestens 30 Minuten dem Feuer standhalten muss. Dies wird üblicherweise dadurch erreicht, dass die Aufheizgeschwindigkeit des Stahls verzögert wird, z. B. durch Überziehen der Stahlkonstruktion mit dämmschichtbildenden Beschichtungen. Hierbei handelt es sich um Anstriche, deren Bestandteile im Brandfall unter Ausbildung eines festen mikroporösen Kohleschaums aufschäumen. Dabei bildet sich eine feinporige und dicke Schaumschicht, die sogenannte Aschekruste, die je nach Zusammensetzung stark wärmeisolierend ist und so das Aufheizen des Bauteils verzögert, sodass die kritische Temperatur von ca. 500°C, frühestens nach 30, 60, 90, 120 Minuten oder bis zu 240 Minuten erreicht wird. Wesentlich für den erreichbaren Feuerwiderstand ist immer die aufgebrachte Schichtdicke der Beschichtung, bzw. der sich daraus entwickelnden Aschekruste. Geschlossene Profile, wie Rohre, benötigen bei vergleichbarer Massivität etwa die doppelte Menge verglichen mit offenen Profilen, wie Träger mit Doppel-T-Profil. Damit die geforderten Feuerwiderstandszeiten eingehalten werden, müssen die Beschichtungen eine bestimmte Dicke aufweisen und die Fähigkeit haben, bei Hitzeeinwirkung eine möglichst voluminöse und damit gut isolierende Aschekruste zu bilden, welche über den Zeitraum der Brandbeanspruchung mechanisch stabil bleibt.

Hierzu existieren im Stand der Technik verschiedene Systeme. Im Wesentlichen wird zwischen 100%-Systemen und lösemittel- bzw. wasserbasierten Systemen unterschieden. Bei den lösemittel- bzw. wasserbasierten Systemen werden Bindemittel, meist Harze, als Lösung, Dispersion oder Emulsion auf das Bauteil aufgetragen. Diese können als Ein-oder Mehrkomponenten-Systeme ausgeführt werden. Nach dem Auftragen verdunstet das Lösungsmittel bzw. das Wasser und hinterlässt einen Film, der mit der Zeit trocknet. Hierbei kann ferner zwischen solchen Systemen unterschieden werden, bei denen sich während der Trocknung die Beschichtung im Wesentlichen nicht mehr ändert, und solchen Systemen, bei denen nach dem Verdunsten das Bindemittel primär durch Oxidations- und Polymerisationsreaktionen härtet, was beispielsweise durch den Luftsauerstoff induziert wird. Die 100%-Systeme enthalten die Bestandteile des Bindemittels ohne Lösungsmittel bzw. Wasser. Sie werden auf das Bauteil aufgetragen, wobei die "Trocknung" der Beschichtung lediglich durch Reaktion der Bindemittelbestandteile untereinander erfolgt.

Die Systeme auf Lösemittel- oder Wasserbasis haben den Nachteil, dass die Trockenzeiten, auch Aushärtezeiten genannt, lang sind und zudem mehrere Schichten aufgetragen werden müssen, also mehrerer Arbeitsgänge bedürfen, um die erforderliche Schichtdicke zu erreichen. Da jede einzelne Schicht vor dem Auftragen der nächsten Schicht entsprechend getrocknet sein muss, führt dies zu einem hohen Aufwand an Arbeitszeit und dementsprechend hohen Kosten und zu einer Verzögerung bei der Fertigstellung des Bauwerks, da je nach klimatischen Bedingungen zum Teil mehrere Tage vergehen, bis die erforderliche Schichtdicke aufgetragen ist. Nachteilig ist auch, dass durch die erforderliche Schichtdicke die Beschichtung während des Trocknens oder bei Hitzeeinwirkung zur Rissbildung und zum Abblättern neigen kann, wodurch im schlimmsten Fall der Untergrund teilweise freigelegt wird, insbesondere bei Systemen, bei denen das Bindemittel nicht nach Verdunsten des Lösungsmittels bzw. des Wassers nachhärtet.

Um diesen Nachteil zu umgehen, wurden Zwei- oder Mehrkomponentensysteme auf Epoxid-Amin-Basis entwickelt, die nahezu ohne Lösemittel auskommen, so dass eine Aushärtung wesentlich schneller erfolgt und zudem dickere Schichten in einem Arbeitsgang aufgetragen werden können, so dass die erforderliche Schichtdicke wesentlich schneller aufgebaut ist. Diese haben jedoch den Nachteil, dass das Bindemittel eine sehr stabile und starre Polymermatrix mit oftmals hohem Erweichungsbereich bildet, was die Schaumbildung durch die Schaumbildner behindert. Daher müssen dicke Schichten aufgetragen werden, um eine ausreichende Schaumdicke für die Isolierung zu erzeugen. Dies ist wiederum nachteilig, da viel Material erforderlich ist. Damit diese Systeme aufgetragen werden können, sind häufig

Verarbeitungstemperaturen von bis zu +70°C erforderlich, was die Anwendung dieser Systeme arbeitsaufwendig und teuer in der Installation macht.

Der Erfindung liegt daher die Aufgabe zugrunde, eine dämmschichtbildende Zusammensetzung für Beschichtungssysteme der eingangs erwähnten Art zu schaffen, die die genannten Nachteile vermeidet, die insbesondere nicht lösemittel- oder wasserbasiert ist und eine schnelle Aushärtung aufweist, aufgrund entsprechend abgestimmter Viskosität einfach aufzutragen ist und aufgrund der erreichbaren guten Intumeszenzrate, d.h. der Bildung einer effektiven Aschekrustenschicht, nur eine geringe Schichtdicke erfordert.

Diese Aufgabe wird durch die Zusammensetzung nach Anspruch 1 gelöst. Bevorzugte Ausführungsformen sind den Unteransprüchen zu entnehmen.

Gegenstand der Erfindung ist demnach eine dämmschichtbildende Zusammensetzung enthaltend (A) ein additionsvernetzendes Polyorganosiloxan, das Si-gebundene Reste mit aliphatischen Kohlenstoff-Kohlenstoff-Mehrfachbindungen aufweist, (B) ein Polyorganosiloxan mit Si-gebundenen Wasserstoffatomen, (C) einen Katalysator, der in der Lage ist, die Reaktion zwischen der Si-gebundenen aliphatischen Kohlenstoff Kohlenstoff-Mehrfachbindung und den Si-gebundenen Wasserstoffatomen zu unterstützen, und (D) ein dämmschichtbildendes Additiv.

Durch die erfindungsgemäße Zusammensetzung können in einfacher und schneller Weise Beschichtungen mit der für die jeweilige Feuerwiderstandsdauer erforderlichen Schichtdicke aufgetragen werden. Die durch die Erfindung erreichten Vorteile sind im Wesentlichen darin zu sehen, dass die den Systemen auf Lösemittel- oder Wasserbasis inhärenten langsamen Aushärtezeiten deutlich verkürzt werden konnten, was die Arbeitszeit erheblich verringert. Aufgrund der im Applikationsbereich geringen Viskosität der Zusammensetzung, eingestellt über geeignete Verdickersysteme oder Lösungsmittel, ist im Unterschied zu Epoxid-Amin-Systemen ein Auftragen ohne Erwärmen der Zusammensetzung möglich, wie zum Beispiel durch das weitverbreitete Airless-Sprühverfahren.

Mit der erfindungsgemäßen Zusammensetzung kann auch ein hoher Füllgrad mit Brandschutzadditiven erreicht werden, indem die Zusammensetzung als Zwei- oder Mehrkomponenten-System konfektioniert wird. Dementsprechend sinkt der Materialaufwand, was sich insbesondere beim großflächigen Auftragen günstig auf die Materialkosten auswirkt. Erreicht wird dies insbesondere durch die Nutzung eines reaktiven Systems, das nicht physikalisch trocknet und damit keinen Volumenverlust durch das Abtrocknen von Lösemitteln oder bei wasserbasierten Systemen von Wasser erleidet, sondern durch Polyaddition härtet. So ist bei einem klassischen System ein Lösemittelgehalt von etwa 25% typisch. Bei der erfindungsgemäßen Zusammensetzung verbleiben mehr als 95 % der Beschichtung auf dem zu schützenden Substrat. Ferner ist die relative Aschekrustenstabilität aufgrund der vorteilhaften Struktur des im Brandfall gebildeten Schaums sehr hoch.

Verglichen mit lösemittel- oder wasserbasierten Systemen, wenn sie ohne Grundierung aufgetragen werden, zeigen die erfindungsgemäßen Zusammensetzungen eine ausgezeichnete Kohäsion und Schlagbeständigkeit.

Zum besseren Verständnis der Erfindung werden die folgenden Erläuterungen der hierin verwendeten Terminologie als sinnvoll erachtet. Im Sinne der Erfindung:

- umfasst der Begriff *"aliphatische Verbindung"* acyclische und cyclische, gesättigte oder ungesättigte Kohlenwasserstoffverbindungen, die nicht aromatisch sind (PAC, 1995, 67, 1307; Glossary of class names of organic compounds and reactivity intermediates based on structure (IUPAC Recommendations 1995));

- bedeutet *"chemische Intumeszenz"* die Bildung einer voluminösen, isolierenden Ascheschicht durch aufeinander abgestimmte Verbindungen, die bei Hitzeeinwirkung miteinander reagieren;

- bedeutet *"physikalische Intumeszenz"* die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt;

- bedeutet *"dämmschichtbildend",* dass im Brandfall ein fester mikroporöser Kohleschaum entsteht, so dass die gebildete feinporige und dicke Schaumschicht, die sogenannte Aschekruste, je nach Zusammensetzung ein Substrat gegen Hitze isoliert;

- ist ein *"Kohlenstofflieferant"* eine organische Verbindung, die durch unvollständige Verbrennung ein Kohlenstoffgerüst hinterlässt und nicht vollständig zu Kohlendioxid und Wasser verbrennt (Carbonifizierung); diese Verbindungen werden auch als *"Kohlenstoffgerüstbildner"* bezeichnet;

- ist ein *"Säurebildner"* eine Verbindung, die sich unter Hitzeeinwirkung, d.h. oberhalb etwa 150°C beispielsweise durch Zersetzung eine nicht flüchtige Säure bildet und dadurch als Katalysator für die Carbonifizierung wirkt; zudem kann sie zur Erniedrigung der Viskosität der Schmelze des Bindemittels beitragen; hiermit gleichbedeutend wird

der Begriff *"Dehydrierungskatalysator"* verwendet;

- ist ein *"Treibmittel"* eine Verbindung, die sich bei erhöhter Temperatur unter Entwicklung inerter, d.h. nicht-brennbarer Gase zersetzt und das durch die Carbonifizierung gebildet Kohlenstoffgerüst und gegebenenfalls das erweichte Bindemittel zu einem Schaum aufbläht (Intumeszenz); dieser Begriff wird gleichbedeutend mit *"Gasbildner"* verwendet;

- ist ein *"Aschekrustenstabilisator"* eine sogenannte gerüstbildende Verbindung, die das Kohlenstoffgerüst (Aschekruste), das aus dem Zusammenwirken der Kohlenstoffbildung aus der Kohlenstoffquelle und dem Gas aus dem Treibmittel, oder der physikalischen Intumeszenz gebildet wird, stabilisiert. Die prinzipielle Wirkungsweise ist dabei die, dass die an sich sehr weichen entstehenden Kohlenstoffschichten durch anorganische Verbindungen mechanisch verfestigt werden; die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern, wodurch die isolierende Wirkung des Schaums aufrechterhalten oder verstärkt wird.

Als additionsvernetzende Polyorganosiloxane werden zweckmäßig solche verwendet, die durch eine Übergangsmetall-katalysierte Additionsreaktion, auch Hydrosilylierung genannt, mit Polyorganosiloxan-Vernetzern, die SiH-Gruppen enthalten, aushärten.

Als Bestandteil (A) werden daher Polyorganosiloxane verwendet, die Si-gebundene Reste mit aliphatischen Kohlenstoff-Kohlenstoff-Mehrfachbindungen aufweisen. Die Kohlenstoff-Kohlenstoff-Mehrfachbindung kann eine Kohlenstoff-Kohlenstoff-Dreifachbindung oder Kohlenstoff-Kohlenstoff-Doppelbindung sein, worunter eine Kohlenstoff-Kohlenstoff-Doppelbindung bevorzugt ist.

Bevorzugt liegt der Gehalt an Kohlenstoff-Kohlenstoff-Mehrfachbindungen, insbesondere Kohlenstoff-Kohlenstoff-Doppelbindungen im Bereich von 0,01 bis 3,0 mmol/g und stärker bevorzugt zwischen 0,05 und 2,5 mmol/g.

Die Reste mit aliphatischen Kohlenstoff-Kohlenstoff-Mehrfachbindungen sitzen dabei terminierend an den Polysiloxanketten, so dass die Polyorganosiloxane (A) mindestens zwei Reste mit aliphatischen Kohlenstoff-Kohlenstoff-Mehrfachbindungen aufweisen. Bevorzugt weisen die Polyorganosiloxane zusätzliche Reste mit aliphatischen Kohlenstoff-Kohlenstoff-Mehrfachbindungen als Seitengruppen entlang der Polysiloxankette auf, so dass die Polyorganosiloxane (A) bevorzugt mindestens drei Reste mit aliphatischen Kohlenstoff-Kohlenstoff-Mehrfachbindungen aufweisen.

Analoges gilt auch für den Bestandteil (B), die Polyorganosiloxan-Vernetzer, die zweckmäßig Polyorganosiloxane mit Si-gebundenen Wasserstoffatomen sind.

Sofern ein Polyorganosiloxan-Vernetzer mit einer Funktionalität von größer 2, insbesondere drei oder größer, verwendet wird, kann auch ein Polyorganosiloxan mit nur zwei Resten, die aliphatische Kohlenstoff-Kohlenstoff-Mehrfachbindungen aufweisen, verwendet werden und umgekehrt.

Gemäß einer Ausführungsform haben die Polyorganosiloxane, die Si-gebundene Reste mit aliphatischen Kohlenstoff-Kohlenstoff-Mehrfachbindungen aufweisen, die Struktur (I)

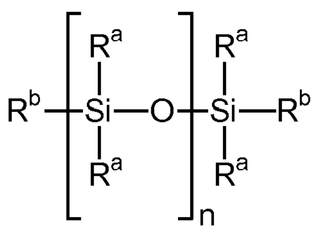

(I),

wobei jedes $R^a$ unabhängig voneinander eine Alkylgruppe darstellt, jedes $R^b$ unabhängig voneinander eine Alkenyl- oder Alkinylgruppe darstellt und n so gewählt ist, dass die Viskosität der Verbindung etwa 30 bis 200.000 mPa·s, bevorzugt 40 bis 100.000 mPa·s und noch stärker bevorzugt 100 bis 10.000 mPa·s bei 25°C ist, oder Struktur (II)

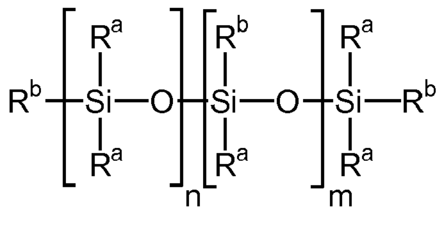

(II),

worin jedes $R^a$ und $R^b$ wie für Struktur (I) definiert ist, und n und m so gewählt werden, dass der Gehalt an Kohlenstoff-Kohlenstoff-Mehrfachbindungen, insbesondere Kohlenstoff-Kohlenstoff-Doppelbindungen im Bereich von 0,01 bis 3,0 mmol/g liegt und die Viskosität der Verbindung etwa 100 bis 4.000 mPa·s, bevorzugt 120 bis 3.000 mPa·s und noch stärker bevorzugt 200 bis 1.500 mPa·s bei 25°C ist.

Es können auch Gemische von Polyorganosiloxanen der Struktur (I) und Polyorganosiloxanen der Struktur (II) als additionsvernetzende Polyorganosiloxane verwendet werden.

Die Alkylgruppe ist bevorzugt eine $C_1$-$C_{18}$-Alkylgruppe, stärker bevorzugt eine $C_1$-$C_8$-Alkylgruppe und noch stärker bevorzugt um eine Methyl- oder Ethylgruppe, wobei eine Methylgruppe am stärksten bevorzugt ist.

Die Alkenylgruppe ist bevorzugt eine $C_2$-$C_8$-Alkenylgruppe, stärker bevorzugt eine $C_2$-$C_4$-Alkenylgruppe, noch stärker eine Vinyl-, Allyl- oder Hexenylgruppe und am stärksten bevorzugt eine Vinylgruppe.

Die Alkinylgruppe ist bevorzugt eine $C_2$-$C_8$-Alkinylgruppe, stärker bevorzugt eine $C_2$-$C_4$-Alkinylgruppe, wie Ethin, 1-Propin und 1-Butin.

Besonders bevorzugt sind Verbindungen der Strukturen (I) und (II), worin jedes $R^a$ eine Methylgruppe und jedes $R^b$ eine Vinylgruppe darstellt.

Der Polyorganosiloxan-Vernetzer ist erfindungsgemäß ein Polyorganosiloxan mit Si-gebundenen Wasserstoffatomen. Die Wasserstoffatome sitzen dabei im Wesentlichen terminierend. Bevorzugt sind zusätzliche Si-gebundene Wasserstoffe in der Polysiloxankette enthalten.

Bevorzugt liegt der Gehalt an Si-gebundenen Wasserstoffatomen im Bereich von 1,0 bis 10,0 mmol/g und stärker bevorzugt zwischen 2,0 und 8,0 mmol/g.

Die Polyorganosiloxane, die Si-gebundene Wasserstoffatome aufweisen, haben bevorzugt die Struktur (III)

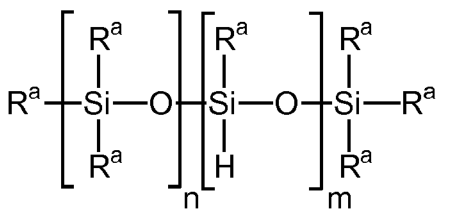

(III),

oder die Struktur (IV)

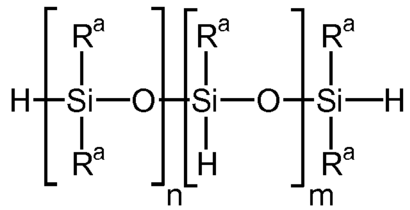

(IV),

worin $R^a$ wie oben für die Strukturen (I) und (II) definiert ist und n und m so gewählt werden, dass der Gehalt an Si-gebundenen Wasserstoffatomen im Bereich von 1,0 bis 10,0 mmol/g liegt und die Viskosität der Verbindung etwa 30 bis 600 mPa·s, bevorzugt 40 bis 500 mPa·s und noch stärker bevorzugt 45 bis 100 mPa·s bei 25°C ist. Es können auch Gemische von Polyorganosiloxanen der Struktur (III) und Polyorganosiloxanen der Struktur (IV) als Vernetzer verwendet werden.

Damit die Hydrosilylierungs-Reaktion hinreichend schnell abläuft und damit die Zusammensetzung als kalthärtende Zusammensetzung bereitgestellt werden kann, ist die Verwendung eines Katalysators, Bestandteil (C), erforderlich.

Der Katalysator ist zweckmäßig eine Verbindung, die in der Lage ist, die Reaktion zwischen der aliphatischen Kohlenstoff-Kohlenstoff-Mehrfachbindung und der SiH-Bindung des Vernetzers zu unterstützen.

Geeignete Katalysatoren umfassen Metall-basierte Katalysatoren mit Metallen der PlatinGruppe, wie Rhodium-, Ruthenium-, Palladium-, Osmium-, Iridium- oder Platin-enthaltende Katalysatoren. Platin-basierte Katalysatoren sind besonders bevorzugt. Sie können in irgendeiner der bekannten Formen vorliegen, beispielsweise Platin(0), wie auf Aktivkohle abgelagertes Platin, Platinchlorid, Platinsalze, Chlorplatinsäure(n) und eingekapselte Formen davon.

Bevorzugt ist der Katalysator aus verdünnten Lösungen hochreaktiver Platinkomplexe aufgebaut. Gelöst sind die Komplexe in den vinylfunktionellen Polydimethylsiloxanen oder in Divinyltetramethyldisiloxan (DE 1262271 B) oder in Methylvinylcyclosiloxan. Stärker bevorzugt ist der Katalysator aufgebaut aus Divinyltetramethyldisiloxan-Platin(0)-Komplex oder Methylvinylcyclosiloxan-Platin(0)-Komplex, wie beispielsweise das zweikernige Umsetzungsprodukt von 1,1,3,3-Tetramethyl-1,3-divinyldisiloxan mit Hexachloridoplatinsäure in Isopropanol ("Karstedt Katalysator")

beispielhaft erwähnt wird.

Der Vinylgehalt der Lösungen beträgt 0,10 bis 12,0 mmol/g, der Platingehalt beträgt 500 bis 20.000 ppm.

Besonders bevorzugte Katalysatoren umfassen den Divinyltetramethyldisiloxan-Platin(0)-Komplex und den Methylvinylcyclosiloxan-Platin(0)-Komplex, entweder gelöst in Divinyltetramethyldisiloxan oder Methylvinylcyclosiloxan.

Erfindungsgemäß enthält der Bestandteil (D) ein dämmschichtbildendes Additiv, wobei das Additiv sowohl einzelne Verbindungen als auch ein Gemisch von mehreren Verbindungen umfassen kann.

Zweckmäßig werden als dämmschichtbildende Additive solche eingesetzt, die unter Hitzeeinwirkung eine sich aufblähende, isolierende Schicht aus schwerentflammbaren Material bilden. Diese Schicht schützt das Substrat vor Überhitzung und verhindert oder verzögert zumindest dadurch die Veränderung der mechanischen und statischen Eigenschaften tragender Bauteile durch Hitzeeinwirkung. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemisches intumeszierende System bekannt und können erfindungsgemäß eingesetzt werden. Alternativ kann die voluminöse, isolierende Schicht durch Aufblähen einer einzelnen Verbindung, die, ohne dass eine chemische Reaktion zwischen zwei Verbindungen stattgefunden hat, bei Hitzeeinwirkung Gase freisetzen gebildet werden. Solche Systeme sind dem Fachmann unter dem Begriff physikalische Intumeszenz bekannt und können ebenfalls erfindungsgemäß eingesetzt werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Treibmittel, die beispielsweise bei Beschichtungen in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich das Treibmittel thermisch unter Bildung inerter Gase, die ein Aufblähen des karbonisierten (verkohlten) Materials und gegebenenfalls des erweichten Bindemittels unter Bildung eines voluminösen, isolierenden Schaums bewirkt.

In einer Ausführungsform der Erfindung, in der die isolierende Schicht durch chemische Intumeszenz gebildet wird, umfasst das dämmschichtbildende Additiv mindestens einen Kohlenstoffgerüstbildner sofern das Bindemittel nicht als solcher verwendet werden kann, mindestens einen Säurebildner, mindestens ein Treibmittel, und mindestens einen anorganischen Gerüstbildner. Die Komponenten des Additivs werden insbesondere so ausgewählt, dass sie einen Synergismus entwickeln können, wobei einige der Verbindungen mehrere Funktionen erfüllen können.

Als Kohlenstofflieferant kommen die in intumeszierenden Brandschutzformulierungen üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide, Oligosaccharide und Polysaccharide, und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, Polyoxyethylen-/Polyoxypropylen-(EO-PO-)Polyole. Bevorzugt werden Pentaerythrit, Dipentaerythrit oder Polyvinylacetat eingesetzt.

Es sei erwähnt, dass das Bindemittel im Brandfall selbst auch die Funktion eines Kohlenstofflieferanten haben kann.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im Wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Als Treibmittel kommen die üblicherweise in Brandschutzformulierungen verwendeten und dem Fachmann bekannten Verbindungen in Betracht, wie Cyanursäure oder Isocyansäure und deren Derivate, Melamin und deren

Derivate. Solche sind: Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränken, wie Melaminpolyphosphat, das sowohl als Säurebildner als auch als Treibmittel wirkt. Weitere Beispiele sind in der GB 2 007 689 A1, EP 139 401 A1 und US 3 969 291 A1 beschrieben.

In einer Ausführungsform der Erfindung, in der die isolierende Schicht zusätzlich zu der chemischen Intumeszenz durch physikalische Intumeszenz gebildet wird, umfasst das dämmschichtbildende Additiv ferner mindestens eine thermisch expandierbare Verbindung, wie eine Graphit-Interkallationsverbindung, die auch als Blähgraphit bekannt sind. Diese können ebenfalls ins Bindemittel eingebunden werden.

Als Blähgraphit kommen beispielsweise bekannte Einlagerungsverbindungen von $SO_x$, $NO_x$, Halogen und/oder Säuren in Graphit in Frage. Diese werden auch als Graphitsalze bezeichnet. Bevorzugt sind Blähgraphite, die bei Temperaturen von beispielsweise 120 bis 350°C unter Aufblähen $SO_2$, $SO_3$, NO und/oder $NO_2$ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in der erfindungsgemäßen Zusammensetzung gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1, deren Inhalt hiermit in diese Anmeldung aufgenommen wird.

Da die im Brandfall gebildete Aschekruste in manchen Fällen zu instabil ist und daher abhängig von deren Dichte und Struktur etwa durch Luftströmungen verblasen werden kann, was sich negativ auf die isolierende Wirkung der Beschichtung auswirkt, kann zu den eben aufgeführten Komponenten mindestens ein Aschekrustenstabilisator gegeben werden.

Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von $\leq 50$ $\mu$m, vorzugsweise von 0,5 bis 10 $\mu$m besitzt. Im Fall der Verwendung des teilchenförmigen Metalls in Form von Fasern, Fäden und/oder Whiskers ist eine Dicke von 0,5 bis 10 $\mu$m und eine Länge von 10 bis 50 $\mu$m bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate, wie beispielsweise DOPO-HQ, DOPO-NQ, und Addukte. Solche Verbindungen sind beispielsweise beschrieben in S. V Levchik, E. D Weil, Polym. Int. 2004, 53, 1901-1929 oder E.D. Weil, S. V. Levchik (Hrsg.), Flame Retardants for Plastic and Textiles - Practical Applications, Hanser, 2009.

Das dämmschichtbildende Additiv kann in einer Menge von 30 bis 99 Gew.-% in der Zusammensetzung enthalten sein, wobei die Menge im Wesentlichen von der Applikationsform der Zusammensetzung (Sprühen, Pinseln und dergleichen) abhängt. Um eine möglichst hohe Intumeszenzrate zu bewirken, wird der Anteil des Bestandteils D in der Gesamtformulierung so hoch wie möglich eingestellt. Bevorzugt beträgt der Anteil des Bestandteils D in der Gesamtformulierung 35 bis 85 Gew.-% und besonders bevorzugt 40 bis 85 Gew.-%.

Die Zusammensetzung kann neben den dämmschichtbildenden Additiven gegebenenfalls organische und/oder anorganische Zuschlagstoffe und/oder weitere Additive enthalten. Derartige Zuschlagstoffe und Additive sind übliche Hilfsmittel, wie Lösungsmittel, etwa Xylol oder Toluol, Netzmittel, etwa auf Basis von Polyacrylaten und/oder Polyphosphaten, Entschäumer, wie Silikonentschäumer, Verdicker, wie Alginatverdicker, Farbstoffe, Fungizide, Weichmacher, wie chlorhaltige Wachse, Bindemittel, Flammhemmer oder diverse Füllstoffe, wie Vermiculit, anorganische Fasern, Quarzsand, Mikroglaskugeln, Glimmer, Siliziumdioxid, Mineralwolle, und dergleichen.

Zusätzliche Additive wie Verdicker, Rheologieadditive und Füllstoffe können der Zusammensetzung ebenfalls zugegeben werden. Als Rheologieadditive, wie AntiAbsetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan-Gummi.

Die erfindungsgemäße Zusammensetzung kann als Zwei- oder Mehrkomponenten-System konfektioniert werden.

Da im Allgemeinen keine Reaktion zwischen dem Bestandteil (A) und dem Bestandteil (B) bei Raumtemperatur eintritt, können diese beiden Bestandteile zusammengelagert werden. Der Katalysator kann entweder getrennt von den Bestandteilen (A) und (B) gelagert werden oder kann in einem dieser Bestandteile oder aufgeteilt auf beide Bestandteile enthalten sein. Hierdurch wird erreicht, dass die beiden Komponenten (A) und (B) des Bindemittels erst unmittelbar vor der Anwendung miteinander gemischt werden und die Härtungsreaktion auslösen. Dies macht das System einfacher in der Handhabung.

Der Bestandteil (D) kann dabei als Gesamtmischung oder in Einzelkomponenten aufgeteilt in einer ersten Komponente I und/oder einer zweiten Komponente II enthalten sein. Die Aufteilung des Bestandteils (D) erfolgt abhängig von der Verträglichkeit der in der Zusammensetzung enthaltenen Verbindungen, so dass weder eine Reaktion der in der Zusammensetzung enthaltenen Verbindungen untereinander bzw. eine gegenseitige Störung noch eine Reaktion dieser Verbindungen mit den Verbindungen der anderen Bestandteile erfolgen kann. Dies ist von den verwendeten Verbindungen abhängig. Hierdurch wird sichergestellt, dass ein möglichst hoher Anteil an Füllstoffen erzielt werden kann. Dies führt zu einer hohen Intumeszenz, selbst bei geringen Schichtdicken der Zusammensetzung.

In einer Ausführungsform ist der Bestandteil (D), der gegebenenfalls mindestens einen Kohlenstofflieferant, mindestens ein Treibmittel und mindestens einen Dehydrierungskatalysator umfasst, derart auf die Komponenten aufgeteilt, dass diese Verbindungen reaktionsinhibierend getrennt voneinander sind.

In einer weiteren Ausführungsform enthält der Bestandteil D ferner einen Aschekrustenstabilisator, der derart auf die Komponenten aufgeteilt ist, dass jede Komponente zumindest einen Teil des Aschekrustenstabilisators enthält.

Die Zusammensetzung wird als Paste mit einem Pinsel, einer Rolle oder durch Sprühen auf das Substrat, insbesondere metallische Substrat aufgebracht. Bevorzugt wird die Zusammensetzung mittels eines Airless-Sprühverfahrens aufgebracht.

Die erfindungsgemäße Zusammensetzung zeichnet sich, verglichen mit den lösemittel-und wasserbasierten Systemen, durch eine relativ schnelle Aushärtung durch eine Additionsreaktion, genauer eine katalysatorunterstützte Hydrosilylierungsreaktion und damit nicht notwendige Trocknung aus. Dies ist insbesondere dann sehr wichtig, wenn die beschichteten Bauteile schnell belastet bzw. weiterverarbeitet werden müssen, sei es durch Beschichtung mit einer Deckschicht oder ein Bewegen oder Transportieren der Bauteile. Auch ist die Beschichtung somit deutlich weniger anfällig gegenüber äußeren Einflüssen auf der Baustelle, wie z.B. Beaufschlagung mit (Regen)-wasser oder Staub und Schmutz, was in lösemittel- oder wasserbasierten Systemen zu einem Auswaschen von wasserlöslichen Bestandteilen wie dem Ammoniumpolyphosphat führen kann, bzw. bei der Aufnahme von Staub zu einer reduzierten Intumeszenz. Durch die geringe Viskosität der Zusammensetzung trotz des hohen Feststoffanteils bleibt die Zusammensetzung einfach zu verarbeiten, insbesondere durch gängige Sprühverfahren.

Deshalb ist die erfindungsgemäße Zusammensetzung als Beschichtung, insbesondere als Brandschutzbeschichtung, bevorzugt sprühbare Beschichtung für Substrate auf metallischer und nicht metallischer Basis geeignet. Die Substrate sind nicht beschränkt und umfassen Bauteile, insbesondere Stahlbauteile und Holzbauteile, aber auch einzelne Kabel, Kabelbündel, Kabeltrassen und Kabelkanäle oder andere Leitungen.

Die erfindungsgemäße Zusammensetzung findet vor allem im Baubereich als Beschichtung, insbesondere Brandschutzbeschichtung für Stahlkonstruktionselemente, aber auch für Konstruktionselemente aus anderen Materialien, wie Beton oder Holz, sowie als Brandschutzbeschichtung für einzelne Kabel, Kabelbündel, Kabeltrassen und Kabelkanäle oder andere Leitungen Verwendung.

Ein weiterer Gegenstand der Erfindung ist daher die Verwendung der erfindungsgemäßen Zusammensetzung als Beschichtung, insbesondere als Beschichtung für Konstruktionselemente oder Bauelemente aus Stahl, Beton, Holz und anderen Materialien, wie etwa Kunststoffen, insbesondere als Brandschutzbeschichtung.

Die vorliegende Erfindung betrifft auch Objekte, die erhalten werden, wenn die erfindungsgemäße Zusammensetzung ausgehärtet ist. Die Objekte haben ausgezeichnete dämmschichtbildende Eigenschaften.

Die folgenden Beispiele dienen der weiteren Erläuterung der Erfindung.

## AUSFÜHRUNGSBEISPIELE

Für die Herstellung von erfindungsgemäßen dämmschichtbildenden Zusammensetzungen werden wie nachfolgend angegeben die Einzelkomponenten mit Hilfe eines Dissolvers vermengt und homogenisiert

Es wurden jeweils das Aushärteverhalten beobachtet, anschließend der Intumeszenzfaktor und die relative Aschekrustenstabilität bestimmt. Hierzu wurde die Massen jeweils in eine runde Teflon-Form mit etwa 2 mm Tiefe und 48 mm Durchmesser gegeben.

Die Zeit für die Aushärtung entspricht dabei der Zeit, nach der die Proben durchgehärtet waren und der Teflon-Form entnommen werden konnten.

Zur Bestimmung des Intumeszenzfaktors und der relativen Aschekrustenstabilität wurde ein Muffelofen auf 600°C vorgeheizt. Es wurde eine Mehrfachmessung der Probendicke mit der Schieblehre durchgeführt und der Mittelwert $h_M$ berechnet. Dann wurden die Proben jeweils in eine zylindrische Stahlform eingebracht und für 30 min im Muffelofen erhitzt. Nach Abkühlen auf Raumtemperatur wurde die Schaumhöhe $h_{E1}$ zunächst zerstörungsfrei bestimmt (Mittelwert einer Mehrfachmessung). Der Intumeszenzfaktor *I* berechnet sich wie folgt:
Intumeszenzfaktor I:

$$I = h_{E1} : h_M$$

Anschließend ließ man in der zylindrischen Stahlform ein definiertes Gewicht (m = 105 g) aus einer definierten Höhe (h = 100 mm) auf den Schaum fallen und bestimmte die nach dieser teilweise zerstörenden Einwirkung verbleibende Schaumhöhe $h_{E2}$. Die relative Aschekrustenstabilität wurde wie folgt berechnet:

relative Aschekrustenstabilität (AKS): AKS = $h_{E2} : h_{E1}$

Bei den folgenden Beispielen wurde als Bestandteil D folgende Zusammensetzung verwendet:

*Bestandteil D:*

| Bestandteil | Menge [g] |
|---|---|
| Pentaerythrit | 8,7 |
| Melamin | 8,7 |
| Ammoniumpolyphosphat | 16,6 |
| Titandioxid | 7,9 |

**Vergleichsbeispiel 1**

Als Vergleich diente ein auf wässriger Dispersionstechnologie basiertes kommerzielles Brandschutzprodukt (Hilti CFP S-WB).

**Vergleichsbeispiel 2**

Als weiterer Vergleich diente ein Standard-Epoxy-Amin-System (Jeffamin® T-403, flüssiges, lösemittelfreies und kristallisationsstabiles Epoxidharz, bestehend aus niedermolekularen Epoxidharzen auf Basis Bisphenol A und Bisphenol F (Epilox® AF 18-30, Leuna-Harze GmbH) und 1,6-Hexandioldiglycidylether), das zu 60 % mit einem Intumeszenzgemisch analog den obigen Beispielen gefüllt ist, getestet.

**Vergleichsbeispiel 3**

Als weiterer Vergleich diente ein Standard-Epoxy-Amin-System (Isophorondiamin, Trimethylolpropantriacrylat und flüssiges, lösemittelfreies und kristallisationsstabiles Epoxidharz, bestehend aus niedermolekularen Epoxidharzen auf Basis Bisphenol A und Bisphenol F (Epilox® AF 18-30, Leuna-Harze GmbH)), das zu 60 % mit einem Intumeszenzgemisch analog den obigen Beispielen gefüllt ist, getestet.

**Beispiel 1**

*Bestandteile A und C*

| Verbindungen | Menge [g] |
|---|---|
| Polymer XP RV 200 a) | 5,9 |
| Catalyst 500 b) | 0,2 |
| a) Vinylfunktionelle Polydimethylsiloxane; hanse chemie AG (Viskosität bei 25°C 360 mPa·s, Vinylgehalt 2,3 mmol/g) b) Katalysatoren für additionsvernetzende Siliconpolymere; hanse chemie AG (Viskosität bei 25°C 360 mPa·s, Vinylgehalt 2,3 mmol/g) | |

*Bestandteil B*

| Verbindungen | Menge [g] |
|---|---|
| Crosslinker 100 c) | 4,6 |
| c) Vernetzer für vinylfunktionelle Siliconpolymere; hanse chemie AG (Viskosität bei 25°C mPa·s; SiH-Gehalt mmol/g) | |

*Bestandteil D*

| Verbindungen | Menge [g] |
|---|---|
| wie oben angegeben | 14,1 |

Aus den in Tabelle 1 dargestellten Ergebnissen wird deutlich, dass die Aushärtung der erfindungsgemäßen Zusammensetzungen schneller erfolgt, als die Vergleichszusammensetzung.

**Tabelle 1:** Ergebnisse der Messungen der Aushärtezeit

| Beispiel | Probendicke $h_A$ (mm) | Aushärtezeit |
|---|---|---|
| Beispiel 1 | 3 | 24 h |
| Vergleichsbeispiel 1 | 2 | 10 Tage |

**Tabelle 2:** Ergebnisse der Messungen des Intumeszenzfaktors und der Aschenkrustenstabilität

| Beispiel | Intumeszenzfaktor I (Vielfaches) | relative Aschenkrustenstabilität AKS (Vielfaches) | Probendicke $h_M$ (mm) |
|---|---|---|---|
| Beispiel 1 | 2 | 0,70 | 3,0 |
| Vergleichsbeispiel 2 | 22 | 0,04 | 1,6 |
| Vergleichsbeispiel 3 | 1,7 | 0,60 | 1,2 |

**Patentansprüche**

1. Dämmschichtbildende Zusammensetzung, enthaltend (A) ein additionsvernetzendes Polyorganosiloxan, das Si-gebundene Reste mit aliphatischen Kohlenstoff-Kohlenstoff-Mehrfachbindungen aufweist, (B) ein Polyorganosiloxan mit Si-gebundenen Wasserstoffatomen, (C) einen Katalysator, der in der Lage ist, die Reaktion zwischen der Si-gebundenen aliphatischen Kohlenstoff Kohlenstoff-Mehrfachbindung und den Si-gebundenen Wasserstoffatomen zu unterstützen, und (D) ein dämmschichtbildendes Additiv.

**2.** Zusammensetzung nach Anspruch 1, wobei das additionsvernetzende Polyorganosiloxan (A) mindestens drei Si-gebundene Reste mit aliphatischen Kohlenstoff-Kohlenstoff-Mehrfachbindungen aufweist und/oder das Polyorganosiloxan (B) mindestens drei Si-gebundene Wasserstoffatome aufweist.

**3.** Zusammensetzung nach Anspruch 1 oder 2, wobei der Gehalt an aliphatischen Kohlenstoff-Kohlenstoff-Mehrfachbindungen der Reste des additionsvernetzenden Polyorganosiloxans (A) im Bereich von 0,01 bis 3,0 mmol/g liegt.

**4.** Zusammensetzung nach einem der vorhergehenden Ansprüche, wobei der Gehalt an Si-gebundenen Wasserstoffatomen der Polyorganosiloxane (B) im Bereich von 1,0 bis 10,0 mmol/g liegt.

**5.** Zusammensetzung nach einem der vorhergehenden Ansprüche, wobei die Si-gebundenen Reste mit aliphatischen Kohlenstoff-Kohlenstoff-Mehrfachbindungen Alkenylgruppen sind.

**6.** Zusammensetzung nach Anspruch 5, wobei die Alkenylgruppen Vinylgruppen sind.

**7.** Zusammensetzung nach einem der vorhergehenden Ansprüche, wobei das Polyorganosiloxan mit Si-gebundenen Resten mit aliphatischen Kohlenstoff-Kohlenstoff-Mehrfachbindungen und/oder das Polyorganosiloxan mit Si-gebundenen Wasserstoffatomen ein Polydialkylsiloxan ist.

**8.** Zusammensetzung nach Anspruch 7, wobei das Polydialkylsiloxan ein Polydimethylsiloxan ist.

**9.** Zusammensetzung nach einem der vorhergehenden Ansprüche, wobei die Si-gebundenen Reste mit Kohlenstoff-Kohlenstoff-Mehrfachbindungen und/oder die Si-gebundenen Wasserstoffatome terminierend sind oder terminierend und zudem als Seitengruppen entlang der Polysiloxankette der Polyorganosiloxane enthalten sind.

**10.** Zusammensetzung nach einem der vorhergehenden Ansprüche, wobei der Katalysator (C) ein Metall-basierter Katalysator ist, in dem das Metall aus der Gruppe, bestehend aus Rhodium, Ruthenium, Palladium, Osmium, Iridium und Platin ausgewählt ist.

**11.** Zusammensetzung nach einem der vorhergehenden Ansprüche, wobei das dämmschichtbildende Additiv ein Gemisch, das mindestens eine thermisch expandierbare Verbindung und/oder mindestens einen Dehydrierungskatalysator, mindestens ein Treibmittel und gegebenenfalls mindestens einen Kohlenstofflieferant enthält, umfasst.

**12.** Zusammensetzung nach Anspruch 11, wobei das dämmschichtbildende Additiv ferner einen Aschekrustenstabilisator enthält.

**13.** Zusammensetzung nach einem der vorhergehenden Ansprüche, wobei die Zusammensetzung ferner organische und/oder anorganische Zuschlagstoffe und/oder weitere Additive enthält.

**14.** Zusammensetzung nach einem der vorhergehenden Ansprüche, die als Zwei- oder Mehrkomponenten-System konfektioniert ist.

**15.** Zusammensetzung nach Anspruch 14, wobei der Bestandteil (D), der gegebenenfalls mindestens einen Kohlenstofflieferant, mindestens ein Treibmittel und mindestens einen Dehydrierungskatalysator umfasst, derart auf die Komponenten aufgeteilt ist, dass diese Verbindungen reaktionsinhibierend getrennt voneinander sind.

**16.** Zusammensetzung nach Anspruch 155, wobei der Bestandteil (D) ferner einen Aschekrustenstabilisator enthält, der vollständig in einer Komponente enthalten sein kann oder auf alle Komponenten aufgeteilt sein kann.

**17.** Verwendung der Zusammensetzung nach einem der Ansprüche 1 bis 16 als Beschichtung.

**18.** Verwendung nach Anspruch 17 für die Beschichtung von Stahlkonstruktionselementen.

**19.** Verwendung nach Anspruch 17 für die Beschichtung von metallischen und/oder nicht metallischen Substraten.

**20.** Verwendung nach einem der Ansprüche 17 bis 19 als Brandschutzschicht.

**21.** Gehärtete Objekte, erhalten durch Härten der Zusammensetzung nach einem der Ansprüche 1 bis 16.

Europäisches Patentamt
European Patent Office
Office européen des brevets

# EUROPÄISCHER RECHERCHENBERICHT

Nummer der Anmeldung
EP 13 17 9404

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2004/170768 A1 (AHMED FAROOQ [CA] ET AL) 2. September 2004 (2004-09-02)<br>* Absätze [0030] - [0040], [0059] - [0061], [0063], [0092]; Beispiele 1,4 *<br>----- | 1-21 | INV.<br>C09D183/04<br>C09D5/18<br>C09K21/00<br>C08L83/04<br>C09K21/10 |
| X | US 4 695 597 A (SEINO MASANORI [JP]) 22. September 1987 (1987-09-22)<br>* Tabelle 1 *<br>----- | 1-21 | |
| | | | RECHERCHIERTE SACHGEBIETE (IPC) |
| | | | C09D<br>C09K<br>C08G<br>C08L<br>C08K |

Der vorliegende Recherchenbericht wurde für alle Patentansprüche erstellt

1

| Recherchenort | Abschlußdatum der Recherche | Prüfer |
|---|---|---|
| München | 28. Januar 2014 | Buestrich, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 13 17 9404

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-01-2014

| Im Recherchenbericht angeführtes Patentdokument | Datum der Veröffentlichung | Mitglied(er) der Patentfamilie | Datum der Veröffentlichung |
|---|---|---|---|
| US 2004170768 A1 | 02-09-2004 | AU 2003257293 A1 | 17-09-2004 |
| | | CA 2420319 A1 | 27-08-2004 |
| | | EP 1597327 A1 | 23-11-2005 |
| | | JP 2006521414 A | 21-09-2006 |
| | | US 2004170768 A1 | 02-09-2004 |
| | | WO 2004076571 A1 | 10-09-2004 |
| US 4695597 A | 22-09-1987 | JP S6243435 A | 25-02-1987 |
| | | US 4695597 A | 22-09-1987 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 1262271 B
- GB 2007689 A1
- EP 139401 A1
- US 3969291 A1
- EP 1489136 A1
- US 4442157 A
- US 3562197 A
- GB 755551 A
- EP 138546 A1


### In der Beschreibung aufgeführte Nicht-Patentliteratur


- *PAC,* 1995, vol. 67, 1307
- *IUPAC Recommendations,* 1995
- **S. V LEVCHIK ; E. D WEIL.** *Polym. Int.,* 2004, vol. 53, 1901-1929
- Flame Retardants for Plastic and Textiles - Practical Applications. Hanser, 2009